# EUROPEAN PATENT APPLICATION

(11) **EP 4 826 985 A1**
(43) Date of publication of application: **21.10.2026**
(21) Application number: 25170711.3
(22) Date of filing: 15.04.2025
(51) Int. Cl.: H02P 1/26, H02P 23/08, H02P 23/14

(54) **ESTIMATING SLIP OF A MOTOR**

(71) Applicant: ABB SCHWEIZ AG, 5400 Baden (CH)
(72) Inventor: HARNEFORS, Lennart, 725 91 Västerås (SE); EK, Magnus, 724 75 Västerås (SE)
(74) Representative: Kransell & Wennborg KB

(57) **Abstract**

The invention is concerned with a a method, slip estimating arrangement, computer program and computer program for estimating slip of a motor as well with a machine comprising such a motor. In the method slip estimating functionality of the slip estimating arrangement obtains (S100) an input current to the machine, obtains (S110) values of the power being input into the machine and estimates (S130) the slip of the motor based on a first expression defining a relationship between an absolute value of a squared input current space vector of the input current and the input power to the machine.

## Description

### TECHNICAL FIELD

The present is concerned with a method, slip estimating arrangement, computer program and computer program for estimating slip of a motor as well with a machine comprising such a motor.

### BACKGROUND

Motor speed is of interest to estimate in many situations, for instance when using a softstarter. Motor speed can of course be measured using sensors. However, it is often of interest to omit sensors and instead estimate the motor speed.

One way of estimating motor speed is described in US 6414463. Here the stator of a motor is placed in a situation where no current is flowing during acceleration of the motor. Then a slowly decaying direct current flows in the rotor. Thereby the rotor can be considered to be a rotating magnet with virtually constant magnetic flux. The rotation induces voltages across stator terminals of the motor, whose frequency corresponds to the product of the known number of pole pairs and the mechanical rotation speed to be measured. This means that the rotation speed of the rotor is detected using the frequency of the stator voltage space vector during a time period which is produced deliberately with the aid of the controllable AC controller and in which no current flows in the stator.

However, it may be of interest to estimate the rotor speed when there is a stator current. It may additionally be of interest to use an approach where another motor characteristics is estimated and from which rotor speed can be deduced.

### SUMMARY

Aspects of the present invention are thus concerned with the problem of estimating a motor characteristic from which rotor speed can be deduced in the presence of a stator current.

This object is according to a first aspect achieved through a method of estimating slip of a motor, the method being performed in a slip estimating arrangement and comprising:
obtaining, by slip estimating functionality of the slip estimating arrangement, measurements of an input current to a machine comprising the motor,
obtaining, by the slip estimating functionality, values of power being input into the machine, and
estimating, by the slip estimating functionality, the slip of the motor based on a first expression defining a relationship between an absolute value of a squared input current space vector of the input current and the input power to the machine.

The object is according to a second aspect achieved through a slip estimating arrangement for estimating the slip of a motor, the slip estimating arrangement comprising at least one processor implementing slip estimating functionality, the at least one processor when implementing the slip estimating functionality being operative to:
obtain measurements of an input current to a machine comprising the motor,
obtain values of power being input into the machine, and
estimate the slip of the motor based on a first expression defining a relationship between an absolute value of a squared input current space vector of the input current and the input power to the machine.

The object is according to a third aspect achieved by a machine comprising a motor and a slip estimating arrangement according to the second aspect.

The object is according to a fourth aspect achieved by a computer program for estimating slip of a motor, the computer program being configured to implement the operation according to the first aspect when being operated on by the at least one processor of the slip estimating arrangement according to the second aspect.

The object is according to a fifth aspect achieved by a computer program product for estimating slip of a motor, the computer program product comprising a data carrier with the computer program according to the fourth aspect.

The input power may be obtained based on measurements of an input voltage to the machine and the input current measurements.

In a first variation of the first aspect, the method further comprises performing, by the slip estimating functionality, signal conditioning on at least a part of the first expression.

In a corresponding variation of the second aspect, the at least one processor when implementing the slip estimating functionality is further operative to perform signal conditioning on at least a part of the first expression.

The signal conditioning may comprise low-pass filtering.

The first expression may comprise a numerator that is based on the current and a denominator based on the power. The low-pass filtering may comprise filtering the numerator and the denominator individually or the quotient formed by them.

According to a second variation of the first aspect, the method further comprises estimating, by the slip estimating functionality, the rotor speed of the motor based on the estimated slip.

According to a corresponding variation of the second aspect, the at least one processor when implementing the slip estimating functionality is further operative to estimate the rotor speed of the motor based on the estimated slip.

The estimating of the rotor speed may be based on a second expression defining a function of 1 minus the estimated slip. The second expression used to estimate the rotor speed may be applied between a low limit of zero and a high limit of one.

The slip may be estimated as the first expression adjusted with a gain.

According to a third variation of the first aspect, the method further comprises determining, by the slip estimating functionality, the gain.

According to a corresponding variation of the second aspect, the at least one processor when implementing the slip estimating functionality is further operative to determine the gain.

The determining of the gain may comprise initializing the gain to a value that is higher than a threshold, reducing the gain using integration of a third expression defining a function of 1 minus the estimated slip and stopping reducing the gain and freezing the integration when the gain reaches the threshold.

The threshold may be based on a sum of the stator and rotor resistances modified by a first constant, which first constant may depend on the space vector scaling constant. The first constant may more particularly inversely depend on the squared space-vector scaling constant.

The third expression used in the determination of the gain may be applied between a low limit of negative infinity and a high limit of zero.

The motor may be an electric motor. The electric motor may additionally be an induction motor.

It is additionally possible that the machine only comprises the motor. It is thus possible that the only entity in the machine is the motor, in which case the input current to the machine is the input current to the motor and the power input into the machine is the power input to the motor.

The machine may additionally comprise a softstarter connected to the motor. In this case it is possible that the input current to the machine is the input current to the softstarter and the power input into the machine is the power input to the softstarter.

When the machine comprises a softstarter, it may comprise fireable rectification components, such as thyristors or triacs, being fired by an applied firing angle.

In this case the initialisation and reducing of the gain may be made during an initialization phase with a set firing angle of the softstarter.

In this case the method may additionally comprise controlling, by controller functionality of the slip estimating arrangement, the firing angle of the softstarter to the set firing angle during the initialization phase.

In this case the at least one processor of the slip estimating arrangement may additionally be operative to implement control functionality for the machine, where the at least one processor when performing the control functionality is operative to control the firing angle of the softstarter to the set firing angle.

The set firing angle may be at least half the maximum firing angle. As one example the set firing angle may be in the range 50 - 100% of the maximum firing angle. The set firing angle may thus be in the range 0.5 to 1.0 times the maximum firing angle. As one example the set firing angle may be the maximum firing angle.

The slip may be continuously determined.

After the initialization phase the firing angle may be controlled freely.

As an example, the firing angle of the softstarter may be controlled to achieve a desired control objective.

One control objective that may be of interest is a desired torque. Other possible control objectives are to control the motor to have a desired speed profile, to have a desired acceleration, to have a desired motor voltage profile or to have a desired motor current profile.

In this case the at least one processor when performing the control functionality may additionally be operative to control, after the initialization phase, the firing angle of the softstarter to achieve the desired control objective.

A machine may also comprise a motor drive instead of or in addition to the softstarter.

Generally, all terms used in the claims are to be interpreted according to their ordinary meaning in the technical field, unless explicitly defined otherwise herein. All references to "a/an/the element, apparatus, component, means, etc." are to be interpreted openly as referring to at least one instance of the "element, apparatus, component, means, etc.", unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a single-line diagram of a static inverse-Γ equivalent circuit of a machine in the form of a softstarter - motor combination,
Fig. 2 schematically shows a slip estimation device,
Fig.3 schematically shows a controller for controlling the machine,
Fig. 4 schematically shows a first realization of a slip estimating arrangement comprising functionality for implementing the slip estimating device and functionality for implementing the controller,
Fig. 5 shows a data carrier with computer program code, in the form of a CD-ROM disc, for implementing the functionality of the slip estimating device and controller,
Fig. 6 schematically shows a number of method steps in a method for estimating the slip of a motor in the machine,
Fig. 7 schematically shows a number of method steps for determining a gain used in the estimating of the slip, and
Fig. 8 shows a simulation of the machine.

### DETAILED DESCRIPTION

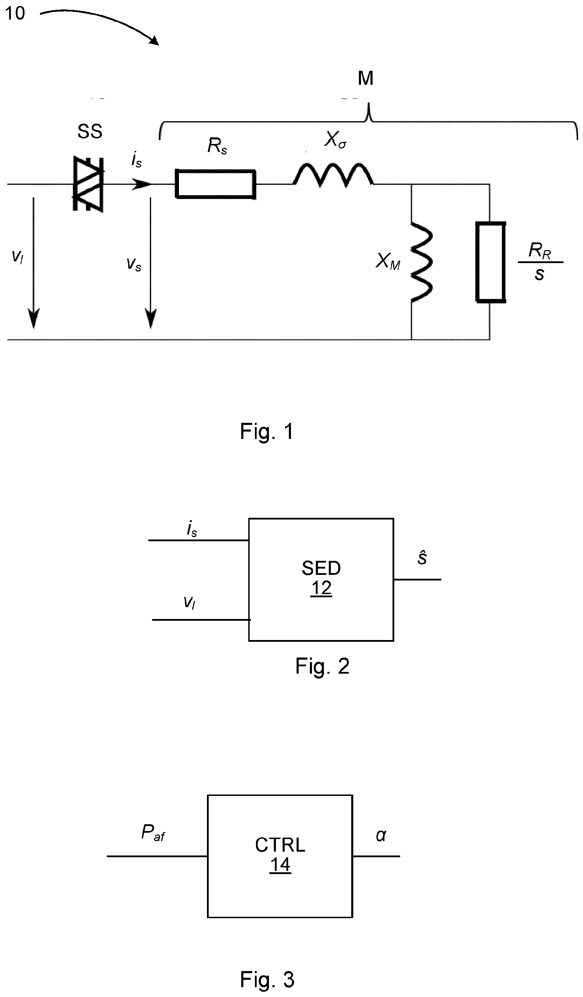

A motor, such as an induction motor, may with advantage be combined with a softstarter. Fig. 1 schematically shows a single-line diagram of a machine 10 that is also a softstarter - motor combination 10, which is represented in a static inverse-Γ equivalent circuit diagram. The machine 10 thus comprises an electric motor M, which in this case is an electric motor and more specifically an induction motor. In this case the machine 10 also comprises a softstarter SS connected to the motor M.

A first end of a softstarter SS makes up a first input terminal of the machine 10 and a second end of the softstarter SS is connected to a first end of a stator resistance *Rₛ*, a second end of which is in turn connected to a first end of a nominal leakage reactance *X_{σ}.* A first end of a parallel circuit is in turn connected to a second end of the nominal leakage reactance *X_{σ},* where a second end of the parallel circuit makes up a second input terminal of the machine 10. The parallel circuit comprises a rotor resistance *R_{R}* divided by motor slip s and the resulting resistance *R_{R}*/*s* is connected in parallel with a nominal magnetizing reactance *X_{M}.*

As can be seen in fig. 1, a softstarter SS typically comprises antiparallel-connected thyristors or triacs, which are series-connected per phase to the ac motor. The softstarter SS thus comprises fireable rectifying components, The purpose of the softstarter SS is, as the name suggests, to limit the inrush current and/or the electrical torque during a starting sequence. This is done by delaying the turn-on instant of the thyristors by the so-called firing angle, defined relative to the zero crossing of the line voltage. This reduces the voltage υₛ applied to the motor M. The firing angle is gradually decreased as the speed rises, eventually reaching zero, when the full line voltage *vₗ* is applied. Once this happens, the softstarter SS is bypassed in order to reduce losses.

The adjustment of the firing angle can be made without rotor-speed measurement. However, knowledge of the speed would be beneficial in some applications, particularly in such situations where a larger-than-nominal starting torque is sometimes required. An example of this is a rock crusher, where large lumps can cause blockage, effectively giving rotor locking. By knowing the speed with reasonable accuracy, it may be possible to detect that application of the nominal starting torque has not resulted in any rotation. The torque limit could then temporarily be increased, hopefully alleviating the blockage.

Installing a speed encoder is not a realistic option, as it would increase costs. In many cases it would not even be possible. Thus, speed estimation must be resorted to. Speed estimation for so-called sensorless control of inverter-fed induction motors has been extensively studied since the 1990s.

However, unlike an inverter-fed motor, the stator voltage *υₛ* of a softstarter-fed motor is normally unavailable. Only the line voltage *υₗ*, i.e., the voltage on the line side of the softstarter SS, is measured. On the other hand, the stator current *iₛ* and the line current are the same. In addition, the active powers on both sides of the softstarter SS can be approximated as equal with good accuracy, since the softstarter losses are low.

One problem thus lies in how to estimate the rotor speed based only on line-side voltage and current measurements.

Aspects of the present disclosure are directed towards estimating such speeds using an estimation of the slip of the motor. However, estimations of the slip may be of interest also in other situations when rotor speed is not an issue.

As was mentioned above, fig. 1 illustrates the single-line diagram of the softstarter-fed induction motor. The equivalent circuit is considered in the steady state when the stator frequency is constant and equal to the line frequency. Since the stator frequency is constant and equal to the line frequency, *X_{σ}* and *X_{M}* are respectively the nominal leakage and magnetizing reactances. Rₛ and *R_{R}* are respectively the stator and rotor resistances, and $S = \frac{{ω}_{1} - {ω}_{r}}{{ω}_{1}}$ (1) is the previously mentioned slip, where ω₁ is the angular stator frequency and ωᵣ is the electrical rotor speed. Speed estimation may be particularly important in the low-speed range (for, as mentioned, detection of standstill even though torque is applied), and therefore a slip s close to 1 may be considered. Because *X_{M} >* 1 per unit (p.u.) and *R_{R}* << 1 p.u., *R_{R}*/*s << X_{M}.* This allows the magnetization branch to be disregarded; almost the entire stator current flows through the rotor branch. Thereby, the input impedance seen from the stator terminals can be approximated as $Z = {R}_{s} + {jX}_{σ} + \frac{{R}_{R}}{s}$ (2)

Consider now the space vectors vₛ and iₛ, which are associated with the phase voltages and currents. For the stator-current space vector iₛ = i_{α} + ji_{β}, where ${i}_{a} = \frac{K}{3} \left(2{i}_{a}-{i}_{b}-{i}_{c}\right) {i}_{β} = \frac{K}{\sqrt{3}} \left({i}_{b}-{i}_{c}\right)$ (3) and where K is the space-vector scaling constant and {iₐ, *i_{b}, i_{c}*} are the phase currents. The stator-voltage space vector is defined similarly. It can be shown that the active input power at the stator terminals is given by $P = \frac{3}{{{2 {K}^{2}}_{︸}}_{κ}} Re \left\{{v}_{s}{i}_{s}^{∗}\right\}$ (4) where K is a first constant that depends on the space-vector scaling constant *K.* As can be seen in equation (4), the first constant κ depends inversely on the squared space-vector scaling constant K, i.e. it depends inversely on the space-vector scaling constant K raised to two.

Since vₛ = Ziₛ, $P = κ Re \left\{Z\right\} {\left|{i}_{s}\right|}^{2} = κRE \left\{{R}_{s}+{jX}_{σ}+\frac{{R}_{R}}{s}\right\} {\left|{i}_{s}\right|}^{2} = κ \left({R}_{s}+\frac{{R}_{R}}{s}\right) {\left|{i}_{s}\right|}^{2}$ (5)

If this relation is divided by P and multiplied by s, one obtains $s = κ \left({sR}_{s}+{R}_{R}\right) \frac{{\left|{i}_{s}\right|}^{2}}{P}$ (6)

Since in particular s close to 1 is of interest, sRₛ ≈ Rₛ. The validity of this approximation is strengthened by the observation that, normally, Rₛ < *R_{R}.* Thus, it is found from (6) that a slip estimate can be obtained as $\hat{s} = κ \left({R}_{s}+{R}_{R}\right) \frac{{\left|{i}_{s}\right|}^{2}}{P}$ (7) from which a speed estimate can be obtained as ω̂ᵣ = (1 - *ŝ)ω₁.* Observe that **i**ₛ as well as *P* can be obtained from the phase voltages and currents on the line side based on the assumption that the power input to the softstarter can be considered equal to the power input to the stator, i.e. the power on both sides of the softstarter SS can be considered equal.

Eq. (7) suggests that knowledge of *Rₛ* and *R_{R}* would be required, but this can be avoided in the following way. Since startup is always made from standstill, where s = 1, the following algorithm can be considered.

The applying of a high firing angle α, such as a firing angle that is at least half the maximum allowed firing angle or a firing angle that is in a range 0.5 - 1.0 times the maximum allowed firing angle, results in a low voltage and low torque. Consequently, the speed will remain at, or close to, zero. A slip estimate is obtained by forming a first expression that depends on an absolute value of a squared input current space vector and the input power.

The first expression defines a relationship between the absolute value of the squared input current space vector and the input power to the machine. The first expression can be a quotient that is based on the absolute value of the squared input current space vector of and the input power. The first expression may more particularly comprise a numerator that is based on the absolute value of the squared input current space vector and a denominator that is based on the power. It can more particularly be the quotient |iₛ|²/*P*. The first expression may also be multiplied by a variable gain *g* giving: $\hat{s} = g FILT \left\{\frac{{\left|{i}_{s}\right|}^{2}}{P}\right\}$ (8)

As indicated by "FILT," low-pass filtering of |iₛ|² and P individually and/or their quotient may be made in order to suppress noise that arises from harmonics in the stator current *iₛ* due to the nonsinusoidal stator voltage υₛ resulting from the softstarter SS. Low-pass filtering is one type of signal conditioning that may be performed on the first expression. In turn, the speed can be estimated as ${\hat{ω}}_{r} = {ω}_{1} LIM {\left[1-\hat{s}\right]}_{0}^{1}$ (9) where [1 - *ŝ*] is a second expression.

*LIM[1 - ŝ*] has the meaning that the argument of the second expression is limited upwards and downwards by the two values 0 and 1. If the value of the second expression is lower than 0, then the estimated speed ω̂ᵣ is set as the angular stator frequency ω₁ times 0, i.e. to 0, while if the value of the second expression is higher than one, then the estimated speed ω̂ᵣ is set as the angular stator frequency ω₁ times one, i.e. to ω₁. Therebetween the estimated speed ω̂ᵣ is set as the angular stator frequency ω₁ times the second expression. *LIM[1 - ŝ*] can also be considered to be a saturation function.

Since the slip estimate initially exceeds 1 (see below), the lower limit 0 is important to apply in order to prevent estimation of negative speed.

The gain *g* should be initialized to a value that is guaranteed to be larger than *κ(Rₛ +R_{R}*). Tuning of *g* may then made as follows: $g = k \int LIM {\left[1-\hat{s}\right]}_{- ∞}^{0} dt$ (10) where k is a positive gain. As long as *g* > *κ*(*Rₛ* + *R_{R}),* an erroneous slip estimate *ŝ* > 1 is obtained. The integrand in (10) is then negative, which will decrease g. Once g reaches *κ*(*Rₛ +R_{R}), ŝ* ≤ 1 is obtained, and the integration in (10) freezes. If *k* is selected appropriately, the adjustment of *g* will occur quite quickly, during which the motor is guaranteed to remain in the very low-speed range, where s is very close to 1. Once *g* is frozen, α can be started to be reduced, giving higher torque and (usually) rising speed.

Thus, it is possible to estimate the slip, which can be useful in a number of situations, where one can be to estimate the rotor speed.

The estimating of the slip may be made in in a slip estimating arrangement comprising a slip estimating device.

Fig. 2 schematically shows the slip estimating device SED 12. It receives the input current *iₛ* and input voltage *υₗ* and estimates a slip *ŝ* based on these quantities.

The estimating may at times depend on a firing angle for controlling the softstarter SS. Therefore, the slip estimating arrangement may also comprise a controller that controls the softstarter motor combination 10.

Fig. 3 schematically shows such a controller CTRL 14, which receives a filtered airgap active power *P_{af}* and determines a firing angle *α* that causes the machine 10 to achieve a desired control objective, such as to provide a desired torque.

It should here be realized that this is merely one example of a possible control objective. Other possible control objectives are to control the motor to have a desired speed profile, to have a desired acceleration, to have a desired motor voltage profile or to have a desired motor current profile.

The slip estimating device 12 and the controller 14 may each be realized as a processor that operates on software implementing slip estimating functionality and controller functionality, respectively. These functionalities may be provided using separate processors. Alternatively, they may be provided using the same processor. Thereby, the slip estimating arrangement may comprise at least one processor.

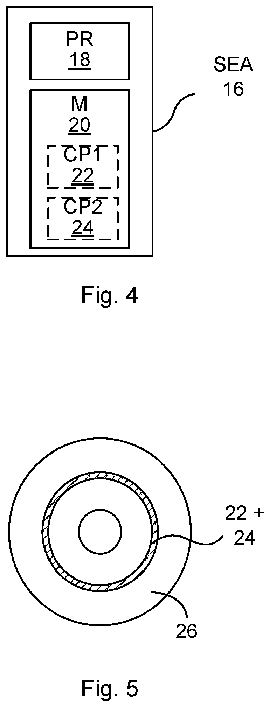

Fig. 4 schematically shows a realization of the slip estimating arrangement SEA 16 comprising a processor PR 18 and a memory M 20 comprising a first computer program CP1 22 that implements the slip estimating functionality and a second computer program CP2 24 that implements the controller functionality. The first computer program 22 may thereby have computer program code, software code or computer instructions implementing the slip estimating functionality and the second computer program 24 may have computer program code, software code or computer instructions implementing the controller functionality. The processor 18 thereby implements the slip determining functionality when running the first computer program 22 and the controller functionality when running the second computer program 24.

It should be realized that the processor 18 may be a central processing unit (CPU), multiprocessor, a digital signal processor (DSP) or the processor of an application specific integrated circuit (ASIC), field programmable gate array (FPGA) etc., capable of implementing the controller functionality. The memory 20 may for example be a random access memory (RAM), a read-only memory (ROM), an erasable programmable read-only memory (EPROM), an electrically erasable programmable read-only memory (EEPROM) or a Flash memory.

Each computer program may also be realized as a computer program product comprising a data carrier with the computer program. One such data carrier 26 or non-volatile storage medium or non-transitory storage medium, in the form of CD ROM disk comprising the first and the second computer program 22, 24, is schematically shown in fig. 5. It should be understood that the data carrier is not limited to CD ROM disks, but may as an example be realized as a USB (Universal Serial Bus) memory or a Flash memory instead.

The slip estimating arrangement 16 with the slip estimating device 12 and optionally also the controller 14 may be a part of the machine 10.

The operation of the slip estimating device 12 may be the following.

Operation may start by the slip estimating device 12 obtaining measurements of the input current *iₛ* to the machine 10, S100. The slip estimating device 12 may also obtain values of the power P being input into the machine 10, S110. The input current may be the line side current that is the same as the stator current *iₛ* and the input power may be obtained in a known fashion based on the line side voltage υₗ and line side current iₛ.

The slip estimating device 12 may additionally determine a gain g, S120. How the gain *g* may be determined will be described in more detail later on. The gain is typically determined in an initialization phase and in this initialization phase the firing angle of the softstarter is at a set firing angle α. Therefore, it is additionally possible that the controller 14 controls the softstarter SS with a set firing angle α during this initialization phase.

The set firing angle may be at least half the maximum firing angle. It may thus be in a range of 50 - 100% of the maximum firing angle. The set firing angle may thus be in a range of 0.5 - 1.0 times the maximum firing angle. As one example the set firing angle may be the maximum firing angle.

After the gain *g* has been determined, the slip estimating device 12 estimates the slip *ŝ* of the motor M based on the previously-mentioned first expression, S130, where the first expression may define a quotient or relationship between an absolute value of a squared space vector of the input current and the input power P, which relationship could be the absolute value of the squared space vector current iₛ divided by the power P.

In order to perform slip estimation, the slip estimating device may first determine the absolute value of the squared space vector of the input current based on the current measurements.

The slip may more particularly be estimated as the first expression adjusted with the gain g, where the adjusting may be multiplying of the first expression with the gain. It is additionally possible that signal conditioning is performed on the first expression that is multiplied with the gain. As an example, the signal conditioning may involve low-pass filtering.

The slip estimating functionality may thus low pass filter at least a part of the first expression. The low pass filtering may comprise separately filtering the numerator and denominator of the first expression or the quotient formed by them.

Optionally, the estimated slip may additionally be used for estimating the rotor speed based on the estimated slip, S140, which may be done based on the angular stator frequency times a second expression, which second expression may define a function of 1 minus the estimated slip. The second expression may also be applied between a low limit of zero and a high limit of one. That is when the second expression is higher than one, it is assigned the value of one and when it is below zero it is assigned the value of zero.

As can be seen above, the above-mentioned estimations are made as the firing angle is the set firing angle, such as a set firing angle that is in the range 0.5 - 1.0 times the maximum firing angle or the maximum firing angle.

After the gain has been determined, the slip and optionally also the rotor speed may be continued to be determined by the slip estimating device 12 while the output torque of the motor M is controlled by the controller 14 using the firing angle α, i.e. as the firing angle is lowered from the set firing angle, which may be a lowering down to zero. In the present example, this controlling made after the initialization phase, is the controlling of the firing angle of the softstarter to achieve a desired control objective. The control may additionally involve closed-loop control. Thereby, the controller 14 may control the machine 10 using the firing angle α as the slip and optionally also the rotor speed are continuously estimated.

As one example given here, the control objective is to obtain a desired torque.

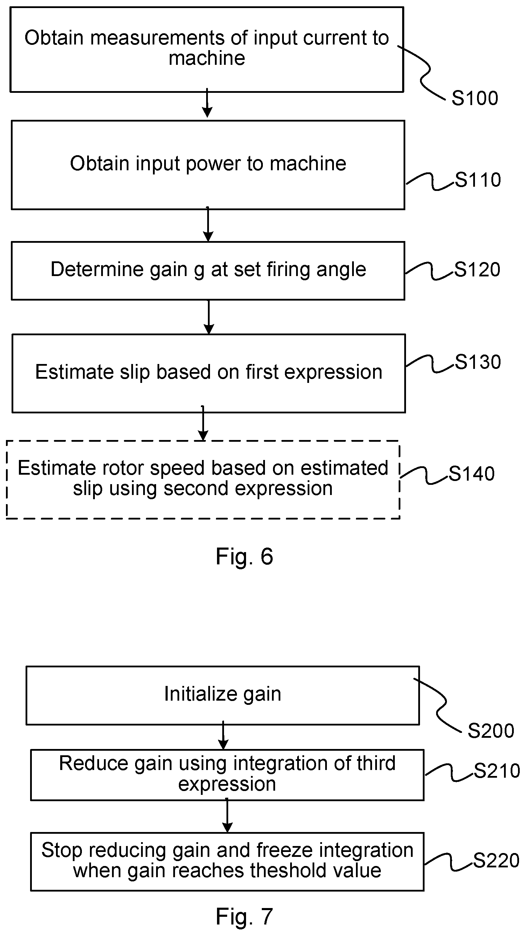

How the determination of the gain *g* can be made will now be described with reference being made to fig. 7. The determining of the gain may comprise initializing the gain to a value that is higher than a threshold, which threshold may be *κ*(*Rₛ* + *R_{R}),* i.e. the sum of the stator and rotor resistances modified by the first constant, S200. Thereby, it can be seen that the threshold may be based on a sum of the stator and rotor resistances modified by the first constant.

Thereafter the gain is reduced using integration of the third expression, S210, where the third expression defines a function of 1 minus the estimated slip. As opposed to the case of estimating the rotor speed, the third expression is applied between a low limit of negative infinity and a high limit of zero. The integrations have the effect that the gain *g* is reduced.

The slip estimating device 12 stops reducing the gain and freezes the integration when the gain reaches the threshold, S220, which threshold in this case is *κ*(*Rₛ* + *R_{R}*). The slip is then estimated using the frozen gain. The initialisation and reducing of the gain are thus made during the initialization phase when the set firing angle of the softstarter is used.

It can be seen that it is not necessary to know the stator and rotor resistances. It is only necessary to have an understanding of the general range of their sum. An initial gain can be selected that is well above this general range. The gain may then be reduced until the slip becomes equal to one.

Simulations have been performed in order to verify the estimations.

A softstarter-plus-induction-motor system with the p.u. parameters *Rₛ* = 0.02, *R_{R}* = 0.05, *X_{σ} =* 0.2, and *X_{M} =* 3 is simulated. The inertia is set to 4000 p.u. The maximum (and initial) firing angle α is set to 2 rad. After a 1-s initial phase where α = 2 rad is applied, closed-loop torque control (using the estimated and filtered airgap active power *P*_{af} for feedback) is commenced, where a torque reference Tₑ is ramped from 0 to 1 p.u. over 3 s.

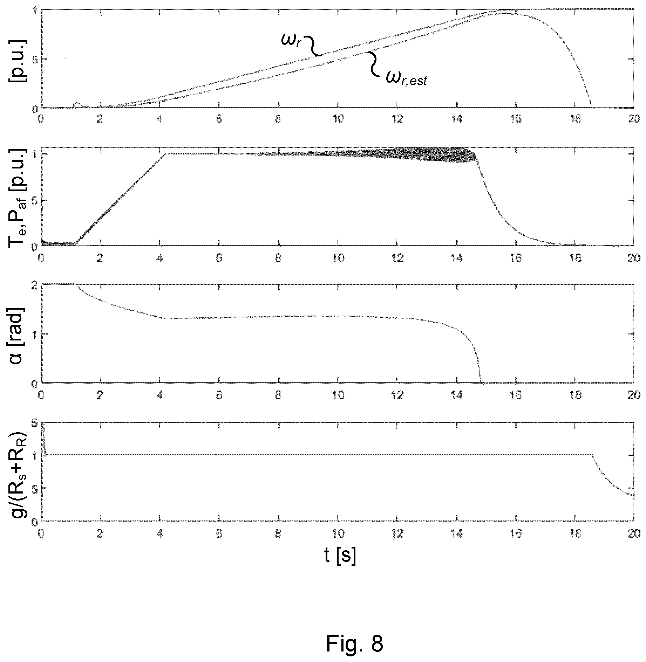

In a first simulation, see Fig. 8, there is no load torque. This allows the speed to settle to 1 p.u. in less than 15 s. As can be seen, *g* converges from the initial value 1 to *Rₛ +R_{R}* (*κ* = 1 in the simulation) in less than 1 s. As expected, the estimated speed tracks the actual speed with a gradually increasing error, as s becomes smaller and the current in the magnetizing branch (neglected in the simplified model) increases, while the current in the rotor branch decreases. Close to s = 0 (ωᵣ *=* 1 p.u.) the speed estimate collapses.

From the simulation it can be concluded that the proposed slip and speed estimation algorithm is effective. There is an increasing estimation error as the speed rises, but particularly for detecting rotation/no rotation the algorithm is very useful.

The inventive concept has mainly been described above with reference to a few examples. However, as is readily appreciated by a person skilled in the art, other embodiments than the ones disclosed above are equally possible within the scope of the inventive concept, as defined by the appended claims.

It is for instance possible to estimate slip for a motor that is not fed by a softstarter. Thus, the machine may only comprise a motor. A machine may also comprise a motor drive instead of or in addition to the softstarter. It is likewise possible to only estimate slip without the estimation of rotor speed.

## Claims

1. A method of estimating slip of a motor (M), the method being performed in a slip estimating arrangement (16) and comprising:
obtaining (S100), by slip estimating functionality of the slip estimating arrangement (16), measurements of an input current (iₛ) to a machine (10) comprising the motor (M),
obtaining (S110), by the slip estimating functionality, values of power (*P*) being input into the machine (10), and
estimating (S130), by the slip estimating functionality, the slip of the motor (M) based on a first expression defining a relationship between an absolute value of a squared space vector of the input current (|**i**ₛ|) and the input power to the machine (10).

2. The method according to claim 1, further comprising estimating (S140), by the slip estimating functionality, the rotor speed of the motor (M) based on the estimated slip.

3. The method according to claim 2, wherein the estimating of the rotor speed is based on a second expression defining a function of 1 minus the estimated slip.

4. The method according to any previous claim, wherein the slip is estimated as the first expression adjusted with a gain (g).

5. The method as claimed in claim 4, further comprising determining (S120) the gain by the slip estimating functionality.

6. The method as claimed in claim 5, wherein the determining of the gain comprises initializing (S200) the gain to a value that is higher than a threshold, reducing (S210) the gain using integration of a third expression defining a function of 1 minus the estimated slip and stopping reducing (S220) the gain and freezing the integration when the gain reaches the threshold.

7. The method according to claim 6, wherein the threshold is based on a sum of the stator and rotor resistances (*Rₛ, R_{R}*) modified by a first constant (κ) that depends on the space vector scaling constant (K).

8. The method as claimed in claim 6 or 7, wherein the machine (10) comprises a softstarter (SS) connected to the motor (M) and the initialisation and reducing of the gain is made during an initialization phase with a set firing angle of the softstarter.

9. The method as claimed in claim 8, further comprising controlling, by controller functionality of the slip estimating arrangement (16), the firing angle of the softstarter to the set firing angle during the initialization phase.

10. The method as claimed in claim 9, wherein the slip is continuously determined and further comprising controlling, by the controller functionality after the initialization phase, the firing angle of the softstarter to achieve a desired control objective.

11. A slip estimating arrangement (16) for estimating the slip of a motor (M), the slip estimating arrangement (16) comprising at least one processor (18) implementing slip estimating functionality, the at least one processor (18) when implementing the slip estimating functionality being operative to:
obtain measurements of an input current (*iₛ*) to a machine (10) comprising the motor (M),
obtain values of power (P) being input into the machine (10), and
estimate the slip of the motor based on a first expression defining a relationship between an absolute value of a squared space vector of the input current (|iₛ|) and the input power to the machine (10).

12. The slip estimating arrangement (16) according to claim 11, wherein the machine (10) comprises a softstarter (SS) connected to the motor (M), the initialisation and reducing of the gain is made during an initialization phase with a set firing angle of the softstarter and said at least one processor of the slip estimating arrangement (16) is operative to implement control functionality for the machine, where said at least one processor when performing the control functionality is operative to control the firing angle of the softstarter to the set firing angle.

13. A machine (10) comprising a motor (10) and a slip estimating arrangement (16) according to claim 11 or 12.

14. A computer program (22, 24) for estimating slip of a motor (M), the computer program (22, 24) being configured to implement the operation according to any of claims 1- 10 when being operated on by the at least one processor (18) of the slip estimating arrangement (16) according to claim 12 or 13.

15. A computer program product for estimating slip of a motor (M), the computer program product comprising a data carrier (26) with the computer program (22, 24) according to claim 14.
